# EUROPÄISCHE PATENTSCHRIFT

(11) **EP 3 948 207 B1**
(45) Veröffentlichungstag und Bekanntmachung des Hinweises auf die Patenterteilung: **07.06.2023**
(21) Anmeldenummer: 20702092.6
(22) Anmeldetag: 23.01.2020
(51) Int. Cl.: G01P 3/48, G01M 1/22, G01M 17/013, G01P 3/481, G01P 3/489, G01M 1/28, G01H 1/00, B60B 3/16, F16B 41/00

(54) **VERFAHREN UND VORRICHTUNG ZUM ERKENNEN EINER GELÖSTEN RADVERSCHRAUBUNG AN EINEM RAD**
METHOD AND DEVICE FOR DETECTING A LOOSENED WHEEL BOLT ON A WHEEL
PROCÉDÉ ET DISPOSITIF DE DÉTECTION D'UN VISSAGE DE ROUE DESSERRÉ SUR UNE ROUE

(30) Priorität: 25.03.2019 DE 102019204026
(43) Veröffentlichungstag der Anmeldung: 09.02.2022
(73) Patentinhaber: Robert Bosch GmbH, 70442 Stuttgart (DE)
(72) Erfinder: SCHEUING, Jan, 74336 Brackenheim (DE); BERG, Jens, 74906 Bad Rappenau (DE)
(86) Internationale Anmeldenummer: PCT/EP2020/051602
(87) Internationale Veröffentlichungsnummer: WO 2020/192982

(56) Entgegenhaltungen:
- EP-A2- 0 902 292
- DE-A1-102013 211 697
- DE-A1-102016 201 331
- DE-T5-112016 002 232

## Beschreibung

### Gebiet der Erfindung

Die Erfindung betrifft ein Verfahren und eine Vorrichtung zum Erkennen einer gelösten Radverschraubung an einem Rad eines Fahrzeugs.

### Stand der Technik

Eine Felge eines Rads eines Fahrzeugs ist über eine Radverschraubung aus Radschrauben oder Radmuttern mit einer Nabe des Rads beziehungsweise einer Bremsscheibe oder Bremstrommel verbunden. Die Felge wird durch eine Klemmkraft der Radverschraubung an die Nabe gepresst. Durch ein Anziehen der Radverschraubung mit einem Drehmomentwerkzeug kann die Klemmkraft innerhalb eines Toleranzbereichs eingestellt werden.

Die Radverschraubung kann sich lösen. Wenn die Radverschraubung soweit gelöst ist, dass die Klemmkraft zu gering ist, um die Felge und Nabe in flächigem Kontakt zu halten, kann es zu Vibrationen kommen. Diese Vibrationen können in einem Geschwindigkeitssignal eines Geschwindigkeitssensors an der Nabe abgebildet werden.

Beispielsweise durch Auswerten eines Frequenzspektrums des Geschwindigkeitssignals können die Vibrationen erkannt werden und auf die gelöste Radverschraubung geschlossen werden.

Die DE 10 2013 211 697 A1 beschreibt eine Sensoreinheit für ein Fahrzeug, um ein mechanisches Spiel zwischen mindestens einem Fahrzeugrad und einer korrespondierenden Radnabe zur Detektion gelöster Radbefestigungsmittel zu erkennen. Die DE 11 2016 002232 T5 beschreibt eine Vorrichtung zur Bestimmung des Rad-Befestigungszustands unter Verwendung eines Servers. Die DE 10 2016 201331 A1 beschreibt ein Verfahren und eine Vorrichtung zur Detektion der azimutalen Winkelposition einer Radunwucht bei einem Rad an einem Fahrzeug. Die EP 0 902 292 A2 beschreibt ein Verfahren zur Korrektur des Signales eines Geschwindigkeitssensors.

### Offenbarung der Erfindung

Vor diesem Hintergrund werden mit dem hier vorgestellten Ansatz ein Verfahren zum Erkennen einer gelösten Radverschraubung an einem Rad eines Fahrzeugs, eine entsprechende Vorrichtung sowie schließlich ein entsprechendes Computerprogrammprodukt und ein maschinenlesbares Speichermedium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, eine Auswertung des Geschwindigkeitssignals zu verbessern und eine gelöste Radverschraubung sicherer zu erkennen.

Es wird ein Verfahren gemäß Anspruch 1 zum Erkennen einer gelösten Radverschraubung an einem Rad eines Fahrzeugs vorgeschlagen, wobei eine Winkelgeschwindigkeit einer Nabe des Rads ausgewertet wird, wobei eine radperiodische Modulation der Winkelgeschwindigkeit ermittelt wird und eine aufgrund der gelösten Radverschraubung hervorgerufene Oszillation des Rads unter Verwendung einer Änderung eines Phasenwinkels der Modulation erkannt wird, wobei die gelöste Radverschraubung erkannt wird, wenn sich der Phasenwinkel gehäuft um zumindest einen erwarteten Winkelschritt ändert.

Ideen zu Ausführungsformen der vorliegenden Erfindung können unter anderem als auf den nachfolgend beschriebenen Gedanken und Erkenntnissen beruhend angesehen werden.

Unter einer Radverschraubung eines Rads kann eine lösbare mechanische Verbindung zwischen einer Felge des Rads und einer Nabe des Rads beziehungsweise einer mit der Nabe mechanisch verbundenen Bremsscheibe oder Bremstrommel des Rads verstanden werden. Die Radverschraubung kann an Befestigungspunkten unter Verwendung von Schraubmitteln ausgeführt sein. Beispielsweise können die Schraubmittel Radschrauben sein, die in Gewindebohrungen der Nabe, Bremsscheibe oder Bremstrommel eingeschraubt sind. Alternativ können die Schraubmittel Radmuttern sein, die auf Gewindebolzen der Nabe, Bremsscheibe oder Bremstrommel aufgeschraubt sind. Die Radverschraubung kann pro Rad eine fahrzeugabhängige Anzahl von Befestigungspunkten aufweisen.

Eine Winkelgeschwindigkeit beziehungsweise Drehgeschwindigkeit der Nabe kann hochauflösend erfasst werden. Beispielsweise kann eine Winkelposition eines Gebers an der Nabe im Megahertzbereich aufgelöst abgetastet werden. Die Winkelposition kann in Form von Zeitdifferenzen zwischen magnetischen Pulsen eines sich mit der Nabe drehenden magnetischen Encoderrades an einer ortsfesten Sensorposition erfasst werden. Die Zeitdifferenzen können beispielsweise mit 4MHz aufgelöst abgetastet werden.

Wenn die Radverschraubung gelöst ist, kann die Felge relativ zur Nabe verkippen. Dadurch dreht die Felge mit dem daran befestigten Reifen nicht mehr um eine vorgesehene Rotationsachse. Es entsteht eine Oszillation des Rads. Mit anderen Worten "eiern" oder taumeln Felge und Reifen. Die Oszillation wird über die gelösten Schraubmittel auf die Nabe übertragen. Da die Nabe weiterhin um ihre vorgesehene Rotationsachse dreht, resultiert eine Modulation der Winkelgeschwindigkeit der Nabe. Ein Phasenwinkel der Modulation kann davon abhängig sein, in welcher räumlichen Relativposition die Felge zur Nabe verkippt ist. Durch eine Veränderung der Relativposition ergibt sich eine charakteristische Änderung des Phasenwinkels, die erkannt werden kann.

Die radperiodische Modulation der Winkelgeschwindigkeit kann eine Ungleichmäßigkeit der momentanen Winkelgeschwindigkeit während einer Umdrehung des Rads beziehungsweise der Nabe sein. Die momentane Winkelgeschwindigkeit kann einer idealisierten gleichmäßigen Drehbewegung in zumindest einem Teilbereich der Umdrehung vorauseilen und in zumindest einem anderen Teilbereich nacheilen.

Die Felge kann in bestimmten Relativpositionen zur Nabe häufiger verharren und Zwischenpositionen wesentlich weniger bzw. seltener einnehmen. Wenn alle Schraubmittel der Radverschraubung gleich gelockert sind, kann eine der Relativpositionen über eine Kippachse durch einen Anlagepunkt an einem der Schraubmittel und einer diametral gegenüberliegende Anlagefläche zwischen Felge und Nabe definiert sein. Beispielsweise kann ein Rad mit sechs Befestigungspunkten sechs bevorzugte Kippachsen aufweisen. Bei fünf Befestigungspunkten kann das Rad fünf Kippachsen aufweisen. Die Kippachsen sind zueinander in einem festen Winkel ausgerichtet.

Wenn ein oder mehrere Schraubmittel fehlen beziehungsweise weiter herausgeschraubt sind, als die anderen Schraubmittel, kann sich kein Anlagepunkt an dem weiter herausgeschraubten Schraubmittel ausbilden. Dann liegt die Felge an den jeweils benachbarten weniger weit herausgeschraubten Schraubmitteln und der gegenüberliegenden Anlagefläche an und führt nur eine geringe Kippbewegung aus.

Da eine absolute Winkelposition zwischen der Nabe und dem Fahrzeug in der Regel unbekannt ist, kann die gelöste Radverschraubung erkannt werden, wenn sich der Phasenwinkel gehäuft um zumindest einen erwarteten Winkelschritt ändert. Der Winkelschritt kann dem konstruktionsbedingten Winkel zwischen den Kippachsen entsprechen.

Wenn die absolute Winkelposition zwischen der Nabe und dem Fahrzeug bekannt ist, kann die gelöste Radverschraubung erkannt werden, wenn der Phasenwinkel gehäuft zwischen zumindest zwei erwarteten Winkelpositionen wechselt. Auch die erwarteten Winkelpositionen können von dem konstruktionsbedingten Winkel zwischen den Kippachsen abhängen.

Die gelöste Radverschraubung kann erkannt werden, wenn die Änderung gehäuft bei Lenkbewegungen, Bremsvorgängen, Beschleunigungsvorgängen und/oder Straßenanregung auftritt. Bei Lenkbewegungen, Bremsvorgängen und Beschleunigungsvorgängen wirken zusätzliche Kräfte am Rad, die nicht wirken, wenn das Rad frei rollt. Durch die zusätzlichen Kräfte kann die Felge von einer Kippachse auf die andere Kippachse wechseln. Die Felge kann auch über mehrere benachbarte Kippachsen hinweg wechseln.

Die Winkelgeschwindigkeit kann unter Verwendung eines Drehzahlsignals eines Drehzahlsensors des Rads ausgewertet werden. Die Modulation kann unter Verwendung von im Drehzahlsignal abgebildeten Impulsen einer mit der Nabe verbundenen Encoderscheibe des Drehzahlsensors ermittelt werden. Eine Encoderscheibe kann winkeläquidistante Markierungselemente aufweisen, die durch den Drehzahlsensor beispielsweise magnetisch über beispielsweise einen Hallsensor oder optisch beispielsweise über einen Fotosensor erfasst werden können. Bei der Erfassung eines Markierungselements kann im Drehzahlsensor ein elektrischer Impuls ausgelöst werden, wenn das Markierungselement in einer bestimmten Relativposition zum Drehzahlsensor angeordnet ist. Ebenso kann ein sinusähnliches Signal erzeugt werden, das die Relativposition zumindest eines der Markierungselemente zum Drehzahlsensor abbildet. Die Markierungselemente können entlang einer Kreisbahn in gleichmäßigen Abständen angeordnet sein. Die Kreisbahn kann konzentrisch zu der Rotationsachse der Nabe ausgerichtet sein.

Ein radperiodischer Teilungsfehler der Encoderscheibe kann kompensiert werden. Ein Teilungsfehler kann durch beispielsweise Fertigungstoleranzen entstehen. Dabei können die Markierungselemente in geringfügig unterschiedlichen Abständen zueinander auf der Kreisbahn angeordnet sein. Alternativ oder ergänzend kann die Encoderscheibe nicht vollständig bestimmungsgemäß zur Rotationsachse ausgerichtet sein. Dadurch kann auch bei absolut gleichmäßiger Rotation der Encoderscheibe eine tatsächlich nicht vorhandene Modulation der Winkelfrequenz angezeigt werden. Der Teilungsfehler ist jedoch winkelfest zur Nabe und kann erkannt und kompensiert werden.

Die gelöste Radverschraubung kann erkannt werden, wenn ferner eine Frequenz der Modulation einer Erwartungsfrequenz entspricht. Die Erwartungsfrequenz kann unter Verwendung einer Drehzahl des Rads bestimmt werden. Die Oszillation des Rads wird durch die Drehung des Rads angeregt. Da die Drehzahl des Rads bekannt ist, ist somit auch eine Anregungsfrequenz der Oszillation bekannt. Die Oszillation wird über die Radverschraubung als die Modulation der Winkelgeschwindigkeit abgebildet. Zumindest eine erwartete Erwartungsfrequenz der Modulation kann durch die von der Drehzahl abhängige Anregungsfrequenz bestimmt werden.

Das Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die dazu ausgebildet ist, um die Schritte einer Variante des hier vorgestellten Verfahrens in entsprechenden Einrichtungen durchzuführen, anzusteuern bzw. umzusetzen.

Die Vorrichtung kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale der Vorrichtung und des Verfahrens in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Darstellung eines Rads eines Fahrzeugs mit einer Vorrichtung gemäß einem Ausführungsbeispiel;
Fig. 2 zeigt ein oszillierendes Rad eines Fahrzeugs mit einer Vorrichtung gemäß einem Ausführungsbeispiel; und
Fig. 3 zeigt ein Rad eines Fahrzeugs mit gelöster Radverschraubung und verschiedenen Kippachsen.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

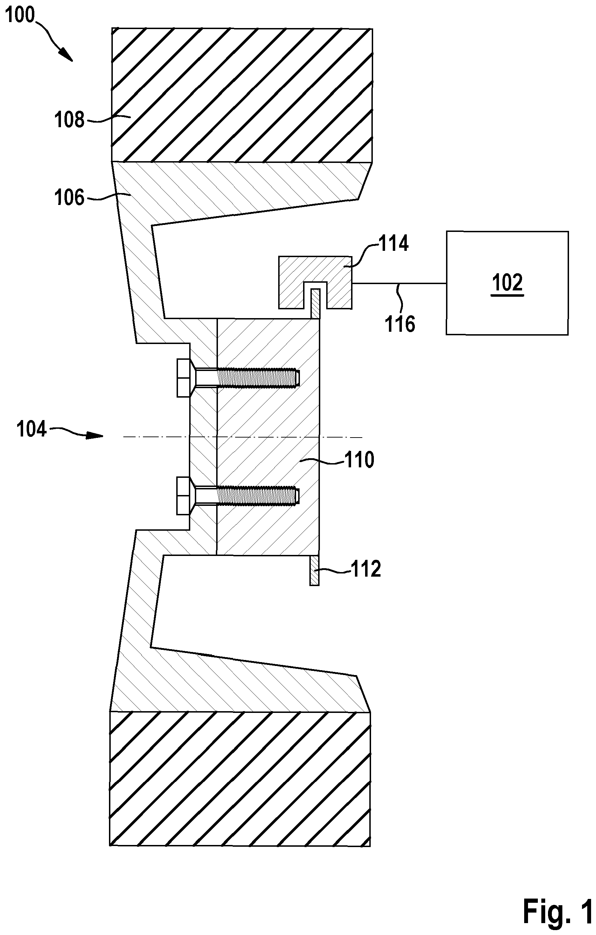

Fig. 1 zeigt eine Darstellung eines Rads 100 eines Fahrzeugs mit einer Vorrichtung 102 gemäß einem Ausführungsbeispiel. Die Vorrichtung 102 ist dazu ausgebildet, eine gelöste Radverschraubung 104 des Rads 100 zu erkennen. Das Rad 100 weist eine Felge 106 und einen auf der Felge 106 montierten Reifen 108 auf. Die Felge 106 ist über die Radverschraubung 104 mit einer Nabe 110 des Fahrzeugs verbunden.

Hier weist die Radverschraubung 104 Radschrauben auf, die durch Durchgangslöcher der Felge 106 gesteckt sind und in Gewindebohrungen der Nabe 110 eingeschraubt sind. Wenn die Radverschraubung 104 wie hier fest angezogen ist, wird die Felge 106 an eine Anlagefläche der Nabe 110 gepresst und ist dadurch drehfest mit der Nabe 110 verbunden.

Eine Encoderscheibe 112 ist mit der Nabe 110 drehfest verbunden. Die Encoderscheibe 112 wird von einem Drehzahlsensor 114 des Fahrzeugs berührungslos abgetastet. Die Encoderscheibe 112 weist bei einer beispielsweise magnetischen Ausführung des Drehzahlsensors 114 im Bereich eines Umfangs der Encoderscheibe 112 angeordnete, abwechselnde Magnetpole auf, die der Drehzahlsensor 114 beispielsweise über einen Hallsensor abtastet.

Dabei erfasst der Hallsensor eine momentane magnetische Flussdichte eines durch die Magnetpole erzeugten Magnetfelds und bildet diese in einem elektrischen Drehzahlsignal 116 ab. Die magnetische Flussdichte ist beispielsweise positiv, wenn der Hallsensor vor einem ersten Magnetpol angeordnet ist. Die magnetische Flussdichte weist einen Nulldurchgang auf, wenn der Hallsensor zwischen dem ersten Magnetpol und einem benachbarten zweiten Magnetpol angeordnet ist. Die magnetische Flussdichte ist negativ, wenn der zweite Magnetpol vor dem Hallsensor angeordnet ist.

Die Magnetpole der Encoderscheibe 112 sind in bekannten Winkelschritten versetzt zueinander angeordnet. Dadurch resultiert ein näherungsweise sinusförmiger Verlauf der magnetischen Flussdichte. Aus einer Periodendauer, der magnetischen Flussdichte und dem bekannten Winkelschritt zwischen den Magnetpolen kann in der Vorrichtung 102 eine Winkelgeschwindigkeit der Nabe 106 abgeleitet werden. Die Periodendauer kann beispielsweise zwischen drei aufeinander folgenden Nulldurchgängen der magnetischen Flussdichte oder zwischen zwei aufeinander folgenden Maxima beziehungsweise Minima der magnetischen Flussdichte gemessen werden. Allgemein kann die Periodendauer zwischen zwei Punkten des Verlaufs der magnetischen Flussdichte mit gleichem Phasenwinkel erfasst werden.

Die Vorrichtung 102 wertet das Drehzahlsignal 116 aus, um eine gelöste Radverschraubung 104 anhand von im Drehzahlsignal 116 abgebildeten Einflüssen der gelösten Radverschraubung 104 zu erkennen.

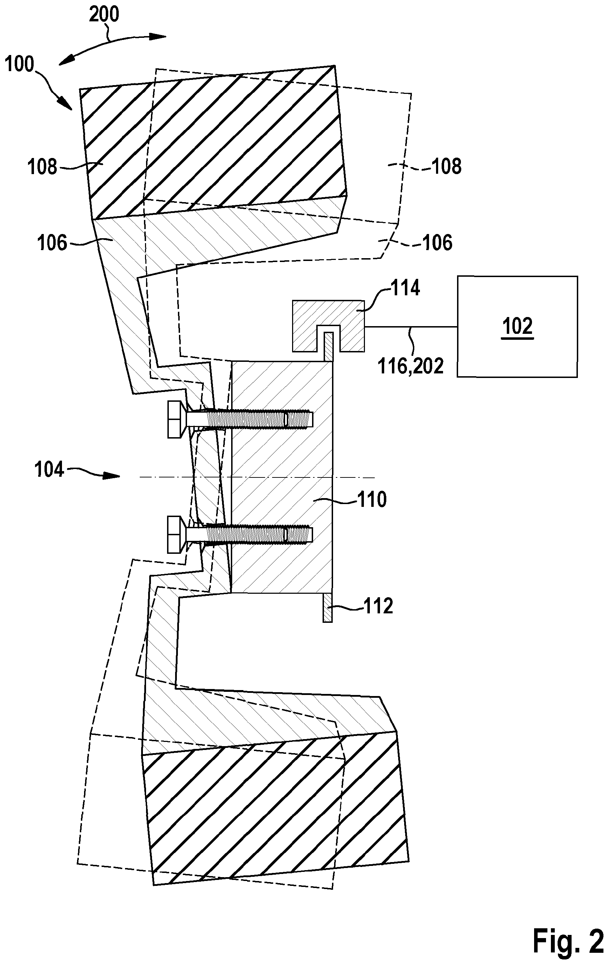

Fig. 2 zeigt ein oszillierendes Rad 100 eines Fahrzeugs mit einer Vorrichtung 102 gemäß einem Ausführungsbeispiel. Die Darstellung in Fig. 2 entspricht dabei im Wesentlichen der Darstellung in Fig. 1. Im Gegensatz dazu ist die Radverschraubung 104 hier gelöst und die Felge 106 ist gegenüber der Nabe 110 verkippt. Durch die Verkippung stimmt eine Rotationsachse der Nabe 110 nicht mehr mit einer Symmetrieachse des Rads 100 überein. Wenn sich das Rad 100 dreht, resultiert eine schlangenlinienförmige Spur des Reifens 108 und das Rad 100 oszilliert beziehungsweise eiert. Die Oszillation 200 wird auf die Nabe 110 übertragen und resultiert in einer Modulation 202 der Winkelgeschwindigkeit.

Durch die Oszillation 200 wird das Rad 100 während zumindest eines ersten Teils einer Umdrehung beschleunigt, also schneller, während es während zumindest eines zweiten Teils der gleichen Umdrehung verzögert, also langsamer wird. Die Modulation 202 wird damit auch in dem Drehzahlsignal 116 abgebildet.

Zusätzlich zu der Oszillation 200 vibriert das Rad 100 in der gekippten Lage, da die gekippte Lage nicht stabil ist. Die Vibration wird ebenfalls auf die Nabe 110 übertragen und in der Modulation 202 abgebildet.

Die Vorrichtung 102 filtert die Modulation 202 aus dem Drehzahlsignal 116. Die Modulation 202 weist einen sinusähnlichen Verlauf auf. Eine Frequenz der Modulation 202 kann proportional zu einer Drehfrequenz des Rads 100 sein. Die Frequenz der Modulation 202 kann insbesondere ein ganzzahliges Vielfaches der Drehfrequenz sein. Die Vibration ist den Einflüssen der Oszillation 200 überlagert.

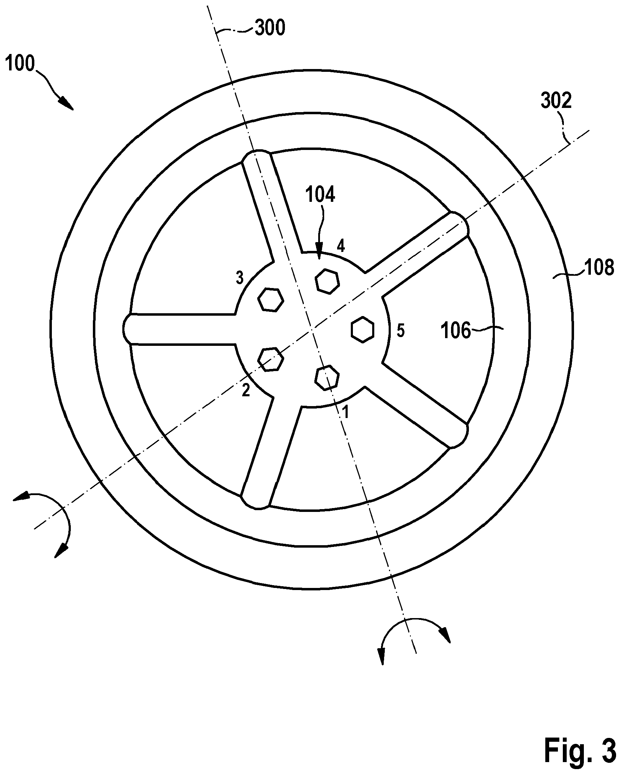

Fig. 3 zeigt ein Rad 100 eines Fahrzeugs mit gelöster Radverschraubung 104 und verschiedenen Kippachsen 300, 302. Das Rad 100 entspricht dabei im Wesentlichen dem Rad in Fig. 2. Winkelpositionen der Kippachsen 300, 302 sind durch die Art der Radverschraubung 104 vorgegeben. Dabei verlaufen die Kippachsen 300, 302 jeweils durch einen der Befestigungspunkte der Radverschraubung 104 und eine dem Befestigungspunkt diametral gegenüberliegende Kontaktfläche zwischen der Felge 106 und der Nabe. Die Kippachsen 300, 302 kreuzen sich damit in der Mitte der Felge 106. Die Kippachsen 300, 302 weisen einen durch die Art der Radverschraubung 104 definierten Winkelschritt zueinander auf. Bei fünf Befestigungspunkten, deren Schraubmittel alle vorhanden sind, ergeben sich fünf Kippachsen 300, 302, die um 72° schräg zueinander verlaufen. Wenn eines der Schraubmittel fehlt, entfällt diese Klippachse 300, 302.

Während das Rad 100 in der jeweiligen Kippachse 300, 302 verkippt ist, liegt die Felge 106 an dem jeweiligen Schraubenkopf beziehungsweise der Mutter des Schraubmittels an dem Befestigungspunkt und der gegenüberliegenden Kontaktfläche an. Durch nur zwei Kontaktpunkte ergibt sich keine statisch bestimmte Lagerung und das Rad 100 kann durch äußere mechanische Einflüsse von einer Kippachse 300 auf eine andere Kippachse 302 bewegt werden. Dadurch verändert sich die Lage des Rads 100 relativ zur Nabe. Wenn sich die Lage von der einen Kippachse 300 zur anderen Kippachse 302 um einen durch die Kippachsen 300, 302 definierten Winkelschritt verändert, verändert sich ein Phasenwinkel der Oszillation. Der Phasenwinkel verändert sich um den gleichen Winkelschritt, um den sich die Lage verändert hat. Die Änderung wird auf die Nabe übertragen, sodass sich der Phasenwinkel der Modulation der Winkelgeschwindigkeit ebenso um den gleichen Winkel ändert.

Mit anderen Worten wird eine Radlöseerkennung anhand eines Phasensprunges im Raddrehzahlsignal vorgestellt.

Zur Erkennung sich lösender Räder eines Fahrzeugs ("Radlöseerkennung") können Raddrehzahlsignale ausgewertet werden. Beispielsweise kann eine bei gelöstem Rad während Lastwechselsituationen im Raddrehzahlsignal beobachtbare Relativbewegung zwischen Radnabe und Felge ausgewertet werden.

Ergänzend kann eine als Amplitudenzunahme im Linienspektrum erkennbare Vibration in Form einer radperiodischen Modulation der Raddrehzahl verwendet werden. Hierzu wird das Signal der gemessenen Zeitdifferenzen auf die Geschwindigkeit normiert und der Encoderrad-Zahnteilungsfehler sowie die von der Radunwucht beeinflusste Spektralkomponente gegebenenfalls kompensiert. Zur Erkennung der radperiodischen Modulation wird das Signal in den Winkelfrequenzbereich transformiert. Liegt unter Berücksichtigung des geschätzten Straßenrauschens das Linienspektrum oberhalb von Amplitudenschwellwerten, wird ebenfalls auf gelöstes Rad erkannt.

Durch den hier vorgestellten Ansatz kann eine eindeutige und robuste Zuordnung der im Raddrehzahlsignal beobachteten Charakteristika zum Zustand "gelöstes Rad" erreicht werden. Dabei erfolgt die Radlöseerkennung auf Basis einer Phasenänderung im Raddrehzahlsignal des gelösten Rads.

Ein gelöstes Rad, bei dem alle Radschrauben/muttern gelöst sind, das Rad aber noch von mindestens einer gehalten wird, wird durch Auswertung der Phasenlage von Schwingungen im Raddrehzahlsignal und deren signifikanter Änderung in bestimmten Fahrsituationen erkannt. Im Vergleich zu bestehenden Verfahren bietet der hier vorgestellte Ansatz eine wesentlich erhöhte Trennfähigkeit von gelöstem Rad und anderen im Raddrehzahlsignal überlagerten Effekten. Dies führt zu einer robusteren und performanteren Erkennung.

Das pro Rad per Raddrehzahlsensor winkeläquidistant erfasste Signal von Zeitdifferenzen zwischen magnetischen Pulsen wird zunächst analog zur bekannten Vibrationseffekterkennung aufbereitet. Vorzugsweise werden die gemessenen Zeitdifferenzen Δti auf eine mittlere Zeitdifferenz ΔtMittel referenziert. Die mittlere Zeitdifferenz ΔtMittel wird vorzugsweise über eine Radumdrehung gemittelt. In dem dann geschwindigkeitsunabhängigen Signal wird der Encoderrad-Zahnteilungsfehler kompensiert. Anschließend werden beispielsweise mittels Fourier-Transformation und/oder Filterung die Spektralamplituden und Phasen dieses Signals berechnet. Von Interesse für die Radlöseerkennung bei beispielsweise fünf Radschrauben/-muttern sind insbesondere die Spektrallinien 2, 3, 4, 5, 10.

In einem alternativen Ausführungsbeispiel entfällt die Referenzierung auf die mittlere Zeitdifferenz. Dem Linienspektrum ist in diesem Fall ein kontinuierliches Spektrum überlagert, welches das Geschwindigkeits- und Beschleunigungsverhalten wiedergibt. Beispielsweise bei Fahrt mit annähernd konstanter Geschwindigkeit unterscheiden sich die interessanten Spektralamplituden nur unwesentlich von denen des vorhergehenden Ausführungsbeispiels.

In einem weiteren Ausführungsbeispiel wird auf die Kompensation des Encoderrad-Zahnteilungsfehlers verzichtet. Dann wird implizit angenommen, dass die Phasenänderung aufgrund des Zustands "gelöstes Rad" signifikant im Vergleich zur Phase des Zahnteilungsfehlers ist. Dieses Ausführungsbeispiel kann sowohl mit als auch ohne Referenzierung ausgeführt werden.

Es kann eine wesentliche Verbesserung der Güte der Radlöseerkennung durch die Beobachtung der Phase des Raddrehzahlsignals und die Detektion einer Phasenänderung welche signifikant für den Zustand "gelöstes Rad" ist erreicht werden.

In Fig. 1 ist ein Schnittbild durch eine Nabe im Zustand "Festes Rad" dargestellt. In Fig. 2 ist dieselbe Nabe im Zustand "gelöstes Rad" dargestellt. Im Zustand "gelöstes Rad" schwankt die Felge von einer zu einer anderen Schraube und somit zeigt sich bei beispielsweise fünf Radschrauben besonders gehäuft eine Phasenänderung um 2·π/5 = 1,2566 rad und ganzzahlige Vielfache davon.

Die physikalische Begründung der Häufung der Phasenänderung um 1.2566 rad ist in Fig. 3 verdeutlicht. Das dargestellte Rad mit gelösten Radschrauben schwingt zunächst um die erste Achse mit einer ersten Phase 300. Die Felge liegt dabei dauerhaft an der der ersten Schraube an und wechselt periodisch zwischen den Schraubenpaaren zwei und drei und vier und fünf. Durch eine Krafteinwirkung wie zum Beispiel eine Änderung der Radmomente, Querkräfte, Lenkbewegungen oder Straßenunebenheiten wechselt Schwingungsachse von der ersten Phase 300 auf eine zweite Phase 302. Das gelöste Rad liegt nun konstant an der zweiten Schraube an und schwingt zwischen den Schraubenpaaren drei und vier und fünf und eins.

Das in Fig. 3 beschriebene Beispiel zeigt das Verhalten bei fünf Radschrauben welche alle noch in der Radnabe verankert sind. Das Verhalten ist auch bei Radmuttern und falls eine oder mehrere Schrauben bereits fehlen erkennbar. Auch bei anderer Schraubenzahl ist der Effekt beobachtbar, es ändert sich hier lediglich der Winkel der Häufung der Phasenänderung, beispielsweise beträgt bei sechs Radschrauben der Winkel 2 · π/6 = 1,0472 rad.

Mit anderen Worten zeigt Fig. 3 den Phasensprung des gelösten Rads. Die erste Achse 300 verdeutlicht die Phasenlage vor dem Wechsel, die zweite Achse 302 zeigt einen Sprung um 1,2566 rad.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Erkennen einer gelösten Radverschraubung (104) an einem Rad (100) eines Fahrzeugs, wobei eine Winkelgeschwindigkeit einer Nabe (110) des Rads (100) ausgewertet wird, wobei eine radperiodische Modulation (202) der Winkelgeschwindigkeit ermittelt wird,
**dadurch gekennzeichnet, dass**
eine aufgrund der gelösten Radverschraubung (104) hervorgerufene Oszillation (200) des Rads (100) unter Verwendung einer Änderung eines Phasenwinkels der Modulation (202) erkannt wird, wobei die gelöste Radverschraubung (104) erkannt wird, wenn sich der Phasenwinkel gehäuft um zumindest einen erwarteten Winkelschritt ändert.

2. Verfahren gemäß Anspruch 1, bei dem die gelöste Radverschraubung (104) erkannt wird, wenn der Phasenwinkel gehäuft zwischen zumindest zwei erwarteten Winkelpositionen wechselt.

3. Verfahren gemäß einem der vorhergehenden Ansprüche, bei dem die gelöste Radverschraubung (104) erkannt wird, wenn die Änderung gehäuft bei Lenkbewegungen, Bremsvorgängen, Beschleunigungsvorgängen und/oder Straßenanregung auftritt.

4. Verfahren gemäß einem der vorhergehenden Ansprüche, bei dem die Winkelgeschwindigkeit unter Verwendung eines Drehzahlsignals (116) eines Drehzahlsensors (114) des Rads (100) ausgewertet wird, wobei die Modulation (202) unter Verwendung von im Drehzahlsignal (116) abgebildeten Impulsen einer mit der Nabe verbundenen Encoderscheibe (112) des Drehzahlsensors (114) ermittelt wird.

5. Verfahren gemäß Anspruch 4, bei dem ein radperiodischer Teilungsfehler der Encoderscheibe (112) kompensiert wird.

6. Verfahren gemäß einem der vorhergehenden Ansprüche, bei dem die gelöste Radverschraubung (104) erkannt wird, wenn ferner eine Frequenz der Modulation (202) einer Erwartungsfrequenz entspricht, wobei die Erwartungsfrequenz unter Verwendung einer Drehzahl des Rads (100) bestimmt wird.

7. Vorrichtung (102), die dazu ausgebildet ist, das Verfahren gemäß einem der vorhergehenden Ansprüche in entsprechenden Einrichtungen auszuführen, umzusetzen und/oder anzusteuern.

8. Computerprogrammprodukt, umfassend Befehle, die bewirken, dass die Vorrichtung des Anspruchs 7 die Verfahrensschritte des Vefahrens gemäß einem der Ansprüche 1 bis 6 ausführt, umsetzt und/oder ansteuert.

9. Maschinenlesbares Speichermedium, auf dem das Computerprogrammprodukt gemäß Anspruch 8 gespeichert ist.

## Claims

1. Method for identifying a loosened wheel bolt arrangement (104) on a wheel (100) of a vehicle, wherein an angular velocity of a hub (110) of the wheel (100) is evaluated, wherein a wheel-periodic modulation (202) of the angular velocity is ascertained, **characterized in that** an oscillation (200) of the wheel (100) caused due to the loosened wheel bolt arrangement (104) is identified using a change in a phase angle of the modulation (202), wherein the loosened wheel bolt arrangement (104) is identified when the phase angle cumulatively changes by at least one expected angular step.

2. Method according to Claim 1, in which the loosened wheel bolt arrangement (104) is identified when the phase angle cumulatively changes between at least two expected angular positions.

3. Method according to either of the preceding claims, in which the loosened wheel bolt arrangement (104) is identified when the change cumulatively occurs during steering movements, braking processes, acceleration processes and/or road excitation.

4. Method according to one of the preceding claims, in which the angular velocity is evaluated using a rotation speed signal (116) of a rotation speed sensor (114) of the wheel (100), wherein the modulation (202) is ascertained using pulses, which are mapped in the rotation speed signal (116), of an encoder disc (112), which is connected to the hub, of the rotation speed sensor (114).

5. Method according to Claim 4, in which a wheel-periodic graduation error of the encoder disc (112) is compensated for.

6. Method according to one of the preceding claims, in which the loosened wheel bolt arrangement (104) is identified if furthermore a frequency of the modulation (202) corresponds to an expected frequency, wherein the expected frequency is determined using a rotation speed of the wheel (100).

7. Apparatus (102) which is designed to execute, implement and/or control the method according to one of the preceding claims in corresponding devices.

8. Computer program product, comprising commands which cause the apparatus of Claim 7 to execute, implement and/or control the method according to one of Claims 1 to 6.

9. Machine-readable storage medium, on which the computer program product according to Claim 8 is stored.

## Revendications

1. Procédé de détection d'un raccord de roue à vis (104) desserré sur une roue (100) d'un véhicule, une vitesse angulaire d'un moyeu (110) de la roue (100) étant évaluée, une modulation de roue périodique (202) de la vitesse angulaire étant déterminée,
**caractérisé en ce que**
une oscillation (200) de la roue (100), due au raccord de roue à vis (104) desserré, est détectée à l'aide d'une variation d'un angle de phase de la modulation (202), le raccord de roue à vis (104) desserré étant détecté lorsque l'angle de phase change fréquemment d'au moins un pas d'angle attendu.

2. Procédé selon la revendication 1, dans lequel le raccord de roue à vis (104) desserré est détecté lorsque l'angle de phase change fréquemment entre au moins deux positions angulaires attendues.

3. Procédé selon l'une des revendications précédentes, dans lequel le raccord de roue à vis (104) desserré est détecté si le changement se produit fréquemment lors des mouvements de braquage, de processus de freinage, de processus d'accélération et/ou d'excitation de la route.

4. Procédé selon l'une des revendications précédentes, dans lequel la vitesse angulaire est évaluée à l'aide d'un signal de vitesse de rotation (116) d'un capteur de vitesse de rotation (114) de la roue (100), la modulation (202) étant déterminée à l'aide d'impulsions, reproduites dans le signal de vitesse de rotation (116), d'un disque codeur (112), relié au moyeu, du capteur de vitesse de rotation (114) .

5. Procédé selon la revendication 4, dans lequel une erreur de pas, périodique pour la roue, du disque codeur (112) est compensée.

6. Procédé selon l'une des revendications précédentes, dans lequel le raccord de roue à vis (104) desserré est détecté si une fréquence de la modulation (202) correspond également à une fréquence attendue, la fréquence attendue étant déterminée à l'aide d'une vitesse de rotation de la roue (100).

7. Dispositif (102) qui est conçu pour réaliser, mettre en œuvre et/ou commander le procédé selon l'une des revendications précédentes dans des modules correspondants.

8. Progiciel comprenant des instructions qui ont pour effet que le dispositif de la revendication 7 réalise, met en œuvre et/ou commande les étapes du procédé selon l'une des revendications 1 à 6.

9. Support de stockage lisible par machine sur lequel est stocké le progiciel selon la revendication 8.
